(19) Europäisches Patentamt

European Patent Office

Office européen des brevets

(11) **EP 1 766 735 B1**

(12) **FASCICULE DE BREVET EUROPEEN**

(45) Date de publication et mention
de la délivrance du brevet:
**19.12.2007 Bulletin 2007/51**

(21) Numéro de dépôt: **05758449.2**

(22) Date de dépôt: **01.07.2005**

(51) Int Cl.:
***H01S 3/00*** *(2006.01)*

(86) Numéro de dépôt international:
**PCT/EP2005/053147**

(87) Numéro de publication internationale:
**WO 2006/003185 (12.01.2006 Gazette 2006/02)**

(54) **CHAINE AMPLIFICATRICE POUR LA GENERATION D'IMPULSIONS LUMINEUSES ULTRACOURTES DE DUREES D'IMPULSION DIFFERENTES**

VERSTÄRKERKETTE ZUM ERZEUGEN ULTRAKURZER LICHTIMPULSE VERSCHIEDENER BREITE

AMPLIFIER CHAIN FOR GENERATING ULTRASHORT LIGHT PULSES OF DIFFERENT WIDTH

(84) Etats contractants désignés:
**DE FR GB**

(30) Priorité: **02.07.2004 FR 0407389**

(43) Date de publication de la demande:
**28.03.2007 Bulletin 2007/13**

(73) Titulaire: **Thales**
**92200 Neuilly-Sur-Seine (FR)**

(72) Inventeurs:
• **MORO, Vincent,**
**Thales Intellectual Property**
**F-94117 Arcueil Cedex (FR)**

• **FALCOZ, Franck,**
**Thales Intellectual Property**
**F-94117 Arcueil Cedex (FR)**

(74) Mandataire: **Henriot, Marie-Pierre**
**Marks & Clerk France**
**31-33, Avenue Aristide Briand**
**F-94117 Arcueil Cedex (FR)**

(56) Documents cités:
WO-A-95/20178      FR-A- 2 834 080
US-A- 4 928 316      US-A- 5 349 591

## Description

La présente invention concerne une chaîne amplificatrice pour la génération d'impulsions lumineuses ultracourtes de durées d'impulsion différentes et s'applique notamment aux chaînes amplificatrices adaptées à l'amplification d'impulsions picoseconde et femtoseconde.

La demande de brevet FR-A-2 834 080 décrit une chaîne amplificatrice pour la génération d'impulsions ultracourtes.

La technique d'amplification à dérive de fréquence ou CPA selon l'expression anglo-saxonne «Chirped Pulse Amplification » est aujourd'hui fréquemment utilisée pour l'amplification d'impulsions lumineuses brèves. Une amplification directe d'impulsions ultracourtes (typiquement quelques dizaines de femtosecondes à quelques picosecondes) conduirait à une détérioration des composants optiques de l'amplificateur bien avant d'avoir atteint le niveau d'énergie recherché.

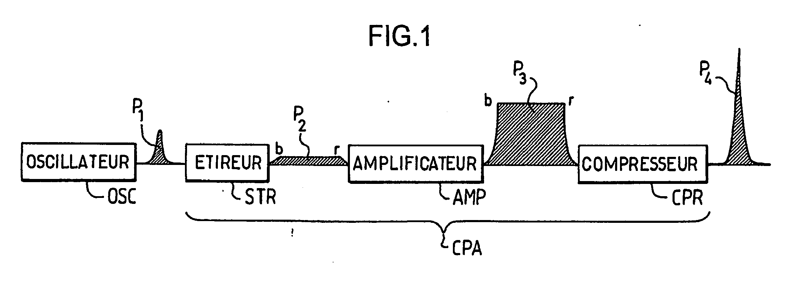

Le principe de la chaîne CPA est décrit sur la figure 1. L'impulsion initiale $P_1$ en sortie d'un oscillateur laser OSC est étirée temporellement par un étireur STR de telle sorte que la durée de l'impulsion est multipliée par un facteur de 1000 à 5000 typiquement. L'impulsion étirée $P_2$ peut ensuite être amplifiée sans dommages par un amplificateur AMP. L'impulsion amplifiée $P_3$ résultante est alors compressée pour atteindre sa durée d'impulsion initiale par un compresseur CPR, permettant d'obtenir une impulsion ultracourte à forte puissance $P_4$.

Le processus d'étirement temporel de l'impulsion incidente doit être parfaitement réversible. De ce fait, il n'est pas possible par exemple de procéder à un filtrage spectral afin d'allonger la durée de l'impulsion. La technique couramment utilisée consiste à utiliser les propriétés dispersives d'éléments dispersifs de type prisme ou réseau afin de faire suivre aux différentes longueurs d'onde de l'impulsion incidente dont la largeur spectrale est large (typiquement quelques dizaines de nanomètres) un chemin optique de longueur différente. En sortie de l'étireur, l'impulsion $P_2$ (voir figure 1) présente ainsi une dispersion temporelle des longueurs d'onde, le « bleu » (noté b), de longueur d'onde plus courte, ayant parcouru un chemin optique plus long que le «rouge » (noté r), de longueur d'onde plus longue. Par exemple, l'étireur comprend pour réaliser cette fonction deux éléments dispersifs de type réseau et un système afocal entre les réseaux permettant d'inverser le signe de la dispersion du réseau, ou un afocal de type catadioptrique, permettant l'utilisation d'un réseau unique. Classiquement, le compresseur utilise des éléments dispersifs très similaires à ceux utilisés dans l'étireur et fonctionnant avec des angles d'incidence sensiblement semblables, mais sans le système afocal, afin de faire suivre un chemin optique plus court aux longueurs d'onde courtes qu'aux longueurs d'onde longues de telle sorte à recompresser l'impulsion.

Dans le domaine des chaînes amplificatrices à impulsions brèves, de nombreuses applications nécessitent la génération d'impulsions accordables temporellement sans écart à la limite de Fourier et ce de quelques dizaines de femtosecondes à quelques picosecondes. Dans les chaînes de l'art antérieur, il est nécessaire pour passer de l'amplification d'impulsions femtosecondes à picosecondes de modifier la configuration de l'étireur et du compresseur de la chaîne CPA, et de changer certains des composants optiques, notamment les réseaux, ce qui nécessite un réalignement de la chaîne. Un tel réalignement demande en général l'intervention d'un technicien spécialisé.

L'invention propose une chaîne amplificatrice présentant une architecture particulière qui permet de passer du régime d'amplification d'impulsions femtosecondes à celui d'amplification d'impulsions picosecondes, de façon extrêmement simplifiée, sans changement de composants ni réalignement de la chaîne. Par ailleurs, l'utilisation de composants identiques dans les deux régimes de fonctionnement permet de réduire le coût de la chaîne par rapport aux chaînes de l'art antérieur. Selon l'invention, cette opération consiste en une rotation des réseaux de l'étireur et du compresseur permettant de changer le taux d'étirement de la chaîne, afin d'adapter l'étirement à la durée de l'impulsion initiale.

Plus précisément, l'invention propose une chaîne amplificatrice pour la génération d'impulsions ultracourtes de durées d'impulsion différentes, comprenant

- un étireur avec au moins un élément dispersif d'entrée de type réseau et destiné à étirer temporellement une impulsion incidente de durée d'impulsion donnée, ladite impulsion présentant sur ledit élément dispersif un angle d'incidence et un angle de diffraction donnés, définissant un taux d'étirement donné de l'étireur,
- un milieu amplificateur destiné à amplifier ladite impulsion étirée,
- un compresseur avec au moins un élément dispersif d'entrée sensiblement identique à celui de l'étireur destiné à compresser temporellement ladite impulsion amplifiée, de telle sorte que la durée de l'impulsion ainsi compressée soit sensiblement égale à celle de l'impulsion incidente,

la chaîne étant caractérisée en ce que l'étireur et le compresseur comprennent des moyens de déplacement desdits éléments dispersifs entre une première et une seconde position, de telle sorte que la valeur de l'angle d'incidence dans une première position soit égale à la valeur de l'angle de diffraction dans la seconde position, et inversement, permettant de définir deux taux d'étirement de la chaîne, adaptés chacun à l'amplification d'impulsions de durées différentes.

D'autres avantages et caractéristiques apparaîtront plus clairement à la lecture de la description qui suit, illustrée par les figures annexées qui représentent :

- La figure 1, le principe d'une chaîne CPA (déjà décrite) ;
- Les figures 2A et 2B, des schémas de l'étireur et du compresseur d'une chaîne selon l'invention, dans un premier régime de fonctionnement ;
- Les figures 3A et 3B, des schémas de l'étireur et du compresseur de la chaîne décrite figures 2A et 2B, dans un second régime de fonctionnement.

Sur les figures, les éléments identiques sont repérés par les mêmes indices.

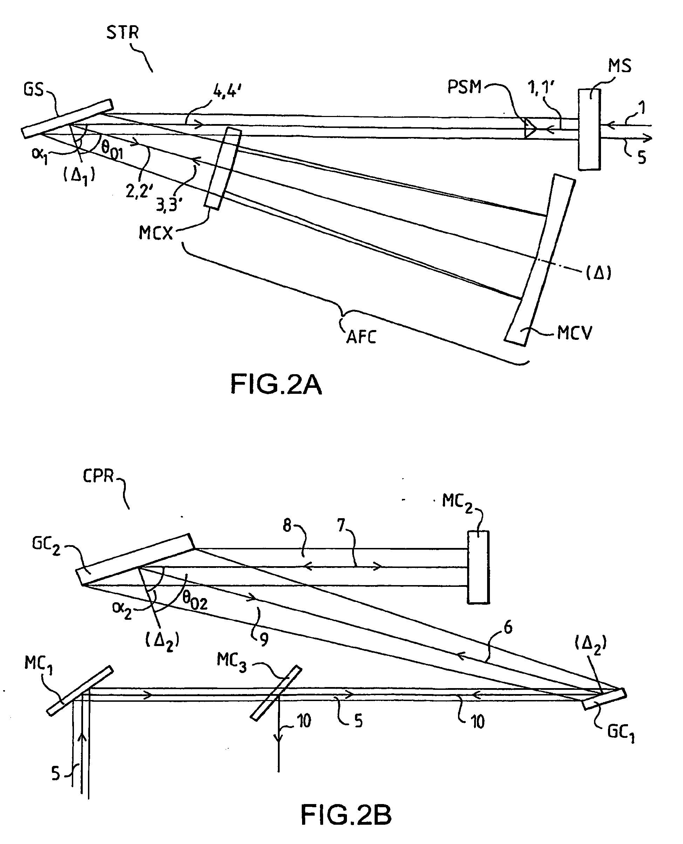

Les figures 2A et 2B illustrent les schémas de principe d'un étireur STR et d'un compresseur CPR dans une chaîne amplificatrice de type CPA selon l'invention. L'étireur STR selon l'exemple de la figure 2A comprend un élément diffractif d'entrée GS de type réseau, destiné à recevoir avec un angle d'incidence $\alpha_1$ donné une impulsion incidente 1 de longueur d'onde centrale $\lambda_0$, de largeur spectrale $\Delta\lambda$ et de durée d'impulsion $\tau$ données. Il comprend également un système optique afocal AFC catadioptrique, formé d'un miroir concave MCV et d'un miroir convexe MCX tels que le rayon de courbure du miroir concave est double de celui du miroir convexe, les deux miroirs étant centrés sur un axe commun ($\Delta$), l'axe ($\Delta$) étant orienté par rapport au réseau GS de telle sorte que le faisceau diffracté à la longueur d'onde centrale $\lambda_0$ arrive sous une incidence normale sur le miroir concave MCV. D'autres configurations connues de l'état de l'art sont possibles pour l'étireur, comme par exemple l'utilisation d'un afocal dioptrique entre un élément diffractif d'entrée et un élément diffractif de sortie. La variante décrite sur la figure 2A est préférée pour des raisons d'encombrement et de qualité du faisceau résultant. Le principe d'étirement, connu de l'état de l'art, est rappelé brièvement. L'impulsion incidente 1 pénètre sur le réseau d'entrée GS de l'étireur avec un angle d'incidence $\alpha_1$ par rapport à la normale ($\Delta_1$) au réseau. L'impulsion est diffractée (faisceau noté 2 sur la figure 2A) avec un angle de diffraction $\theta_{01}$ à la longueur d'onde centrale $\lambda_0$ de l'impulsion incidente et avec une différence d'angle $\Delta\theta$ entre la longueur d'onde la plus courte et la longueur d'onde la plus longue suivant la formule classique des réseaux :

$$\sin\alpha_1 + \sin\theta(\lambda) = N\lambda \qquad (1)$$

Où N est le nombre de traits du réseau par unité de longueur, et $\theta(\lambda)$ l'angle de diffraction à la longueur d'onde $\lambda$.

Pour des raisons de clarté, seul le faisceau à la longueur d'onde centrale $\lambda_0$ est représenté sur la figure 2A. Le faisceau traverse le système afocal AFC puis le faisceau 3 issu de l'afocal est à nouveau diffracté par le réseau GS pour former un faisceau 4, décalé par rapport au faisceau 1 d'entrée (selon la direction perpendiculaire au plan de la figure). Un dispositif de réflexion MS permet de réfléchir ledit faisceau 4 en sens opposé (faisceau 1') pour terminer le processus d'étirement de l'impulsion. Le faisceau 1' ainsi réfléchi suit le même parcours (1', 2', 3', 4') que le faisceau incident 1 pour former un faisceau collimaté 5 parallèle au faisceau incident 1. Selon une variante, un prisme PSM permet un second passage dans l'étireur. Grâce à l'élément diffractif GS, les différentes composantes spectrales de l'impulsion suivent des chemins de longueurs différentes. Le temps de groupe $t_g(\lambda)$, c'est à dire le temps nécessaire à chaque composante spectrale $\lambda$ pour traverser le dispositif est alors une fonction non constante en bnction de la longueur d'onde. Dans le cas de l'étireur, du fait de la présence de l'afocal, cette fonction est décroissante (elle est croissante dans le compresseur qui présente classiquement une géométrie similaire, mais sans afocal).

On définit le taux d'étirement $dt_g/d\lambda(\lambda)$ de l'étireur comme la durée étirée par unité de largeur spectrale du faisceau incident. Il se calcule en dérivant l'expression du temps de groupe $t_g(\lambda)$. On montre que le taux d'étirement s'exprime de la façon suivante :

$$dt_g/d\lambda(\lambda) = 4paN^2\lambda/c.\cos^2\theta_0 \qquad (2)$$

Où c est la vitesse de la lumière dans le vide, p le nombre de passage dans l'étireur (dans cet exemple, 2), N est le nombre de traits du réseau par unité de longueur et a est la distance entre le réseau d'entrée et le plan focal du miroir concave (ou la demi-distance entre les deux réseaux dans le cas d'un étireur avec afocal de type dioptrique). Classiquement, l'impulsion étirée est alors amplifiée par un milieu amplificateur (non représenté) puis compressée par le compresseur pour retrouver sa durée d'impulsion initiale.

L'impulsion étirée et amplifiée 5 est ensuite dirigée (dans cet exemple au moyen d'un premier miroir de renvoi $MC_1$) vers le compresseur CPR. Il comprend classiquement une optique de mise en forme (non représentée) de l'impulsion incidente, puis deux réseaux $GC_1$ et $GC_2$ identiques et disposés parallèlement, ainsi qu'un miroir de renvoi $MC_2$ et un miroir de sortie $MC_3$. Les réseaux $GC_1$ et $GC_2$ sont dimensionnés et agencés pour permettre la compression de l'impulsion 5 incidente dans le compresseur de telle sorte à ce que l'impulsion en sortie du compresseur ait une durée d'impulsion sensiblement identique à celle de l'impulsion incidente 1 dans la chaîne amplificatrice. En pratique, la durée d'impulsion est rarement rigoureusement identique mais on essaie de s'en approcher. Ainsi, l'impulsion 5 arrive sur le réseau $GC_1$ avec un angle d'incidence $\alpha_2$ par rapport à la normale au réseau ($\Delta_2$), puis diffracté avec un angle de diffraction $\theta_{02}$ à la longueur d'onde centrale $\lambda_0$. L'impulsion diffractée 6 est envoyée sur le second réseau $GC_2$ identique à $GC_1$ et parallèle à celui-ci de telle sorte que l'impulsion diffractée 7 se trouve collimatée. L'impulsion 7 est renvoyée dans le compresseur grâce au miroir de renvoi $MC_2$ puis suit le parcours inverse (8, 9, 10). L'impulsion compressée 10 est ensuite éjectée du compresseur par le miroir de sortie $MC_3$. Une configuration repliée avec un seul réseau est également possible.

Dans le domaine des chaînes amplificatrices à impulsions brèves, de nombreuses applications nécessitent la génération d'impulsions soit femtosecondes, pour la résolution temporelle, soit picosecondes, pour la résolution spectrale. Par exemple, on peut utiliser un oscillateur capable de générer des impulsions picosecondes ou femtosecondes. On recherche classiquement une durée étirée pour l'impulsion de sortie 5 de l'ordre de 100 psec au minimum, durée pour laquelle l'amplification peut se faire sans dommage. L'étireur et le compresseur sont ainsi dimensionnés pour obtenir un taux d'étirement ajusté à la durée de l'impulsion incidente. Dans les chaînes de l'art antérieur, lorsque l'on veut travailler aussi bien avec des impulsions incidentes femtosecondes que picosecondes, il est alors nécessaire pour ajuster le taux d'étirement de modifier la configuration de l'étireur et du compresseur de la chaîne CPA, et de changer certains des composants optiques, notamment les réseaux, ce qui nécessite un réalignement de la chaîne. Un tel réalignement est compliqué. Par ailleurs, cela nécessite de prévoir des composants spécifiques pour le fonctionnement en régime femtoseconde et en régime picoseconde, ce qui est coûteux.

La chaîne amplificatrice selon l'invention présente une architecture particulière permettant par une opération simple et sans changement des composants de la chaîne de passer d'un régime de fonctionnement temporel à un autre. Pour cela, l'étireur et le compresseur comprennent des moyens de déplacement des éléments dispersifs de l'étireur et du compresseur, par exemple des moyens de rotation, permettant de faire basculer ces éléments d'une première position à une seconde position, de telle sorte que la valeur de l'angle d'incidence dans une première position soit égale à la valeur de l'angle de diffraction de la seconde position, et inversement, permettant de définir deux taux d'étirement de la chaîne, adaptés chacun à l'amplification d'impulsions de durées données différentes. Par souci de clarté, les moyens de rotation ne sont pas représentés sur les figures. Les moyens de rotation sont par exemple formés d'une platine de rotation. Alternativement, des références mécaniques peuvent être utilisées pour définir lesdites positions des éléments dispersifs.

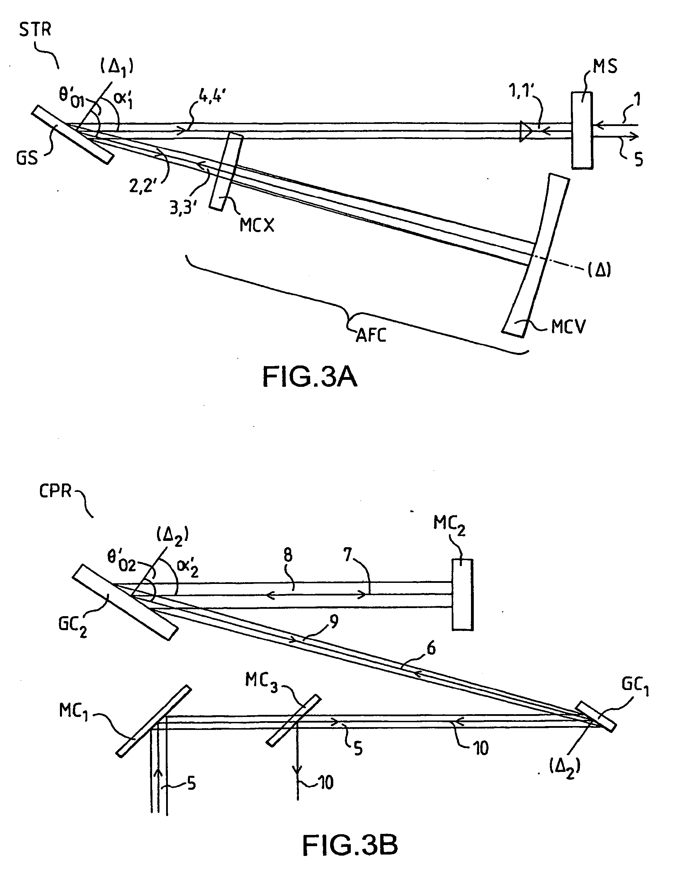

Les figures 2A et 2B représentent ainsi selon un exemple de réalisation de l'invention, l'étireur et le compresseur d'une chaîne amplificatrice selon l'invention dans un premier régime de fonctionnement, et les figures 3A et 3B représentent l'étireur et le compresseur de la même chaîne amplificatrice dans un second mode de fonctionnement.

Dans le premier régime de fonctionnement (figures 2A, 2B), les angles d'incidence $\alpha_1$ et de diffraction $\theta_{01}$ de l'impulsion incidente 1 sur le réseau d'entrée GS de l'étireur STR sont tels que $\alpha_1 > \theta_{01}$. Le taux d'étirement, donné par l'équation (2) ci-dessus, présente une valeur suffisante pour permettre l'étirement d'impulsions incidentes de quelques dizaines de femtosecondes par exemple à une centaine de picosecondes. Les angles d'incidence $\alpha_2$ et de diffraction $\theta_{02}$ de l'impulsion incidente 5 sur le réseau d'entrée GC1 du compresseur CPR sont sensiblement identiques aux angles d'incidence $\alpha_1$ et de diffraction $\theta_{01}$ de l'impulsion incidente 1 sur le réseau d'entrée GS de l'étireur STR.

Dans le second régime de fonctionnement (figures 3A et 3B), les réseaux GS, GC1, GC2 sont basculés dans une deuxième position, de telle sorte que les angles d'incidence $\alpha'_1$ et de diffraction $\theta'_{01}$ de l'impulsion incidente 1 sur le réseau d'entrée GS de l'étireur STR soient tels que $\alpha'_1 < \theta'_{01}$, les valeurs absolues des différences entre angle incident et angle diffracté restant identiques dans les deux positions. De la même façon, les réseaux GC1 et GC2 sont basculés de telle sorte qu'à nouveau, les angles d'incidence $\alpha'_2$ et de diffraction $\theta'_{02}$ de l'impulsion incidente 5 sur le réseau d'entrée GC1 et de l'impulsion incidente 6 sur le réseau GC2 du compresseur CPR soient sensiblement identiques aux angles d'incidence $\alpha'_1$ et de diffraction $\theta'_{01}$ de l'impulsion incidente 1 sur le réseau d'entrée GS de l'étireur STR. Dans ce second régime de fonctionnement, l'angle diffracté est plus grand que l'angle incident, le taux d'étirement est donc de valeur absolue plus grande que celui obtenu dans le premier régime de fonctionnement, permettant l'étirement d'impulsions plus longues (de l'ordre de la picoseconde) et dont la largeur spectrale est plus courte que celle d'impulsions femtosecondes, à des durées d'impulsions étirées de l'ordre de la centaine de picosecondes. Par ailleurs, comme entre les deux positions il y a inversion des valeurs des angles d'incidence et de diffraction, la géométrie reste la même, ce qui permet de changer le taux d'étirement sans modifier les autres paramètres de la chaîne. Autrement dit, que ce soit dans le premier régime de fonctionnement (figures 2A, 2B) ou dans le second (figures 3A, 3B), les faisceaux (5) issus de l'étireur STR sont extraits exactement à la même position et peuvent donc être injectés dans le compresseur sans réalignement de celui-ci, et les faisceaux (10) issus du compresseur sont également extraits à la même position dans les deux régimes de fonctionnement.

Cette configuration originale de la chaîne amplificatrice selon l'invention présente ainsi un avantage remarquable par rapport aux chaînes de l'art antérieur.

La déposante a montré par exemple qu'une chaîne amplificatrice pour l'amplification d'impulsions de quelques dizaines de femtosecondes à quelques centaines de femtosecondes, de longueur d'onde centrale sensiblement égale à 800 nm, pouvait être réalisée avec les paramètres suivants :

- un étireur double passage, comprenant un réseau de diffraction avec un nombre de traits d'environ 2200 tr/mm, et un afocal avec triplet de Ôfner de type catadioptrique,
- un compresseur comprenant deux réseaux sensiblement identiques, parallèles, dont le nombre de traits est également de 2200 tr/mm,
- les angles d'incidence et de diffraction sur le réseau d'entrée de l'étireur et du compresseur sont sensiblement identiques, de l'ordre de 70° et 55°ou inversement selon la position desdits réseaux.

Bien entendu, l'exemple ci-dessus décrit n'est pas limitatif et de nombreuses variantes de réalisation sont possibles, selon les caractéristiques recherchées de la chaîne.

Notamment des moyens de filtrage de différents types peuvent être prévus pour adapter la largeur spectrale de l'impulsion incidente permettant de faire varier la largeur spectrale de l'impulsion issue de l'oscillateur, et donc sa durée. Par exemple les moyens de filtrage comprennent un filtre interférentiel ou peuvent être formés d'un masque positionné dans un plan de Fourier de l'étireur. Selon une variante, les moyens de filtrage comprennent un filtre programmable de type AOPDF (abréviation de l'expression anglo-saxonne « Acousto Optic Programmable Dispersif Filter »), permettant un réglage fin et continu de la durée d'impulsion dans chacune des configurations. Un filtre de ce type est par exemple décrit dans le brevet français FR 2751095 au nom de la déposante.

L'invention concerne aussi une source laser pour la génération d'impulsions ultracourtes de durée d'impulsion variable, comprenant un ou plusieurs oscillateurs laser et une chaîne amplificatrice selon l'invention, telle qu'elle a été décrite précédemment.

Selon une variante, un oscillateur est utilisé en sortie duquel des moyens de filtrage sont prévus tels que ceux qui ont été décrits précédemment. Plusieurs oscillateurs peuvent également être mis en oeuvre, permettant de délivrer des impulsions de largeur spectrale donnée différente. Il est également possible d'avoir un oscillateur laser permettant de délivrer des impulsions de largeur spectrale variable et une chaîne amplificatrice telle qu'elle a été décrite précédemment.

**Revendications**

1. Chaîne amplificatrice pour la génération d'impulsions ultracourtes de durées d'impulsion différentes, comprenant

    - un étireur (STR) avec au moins un élément dispersif d'entrée (GS) de type réseau et destiné à étirer temporellement une impulsion incidente (1) de durée d'impulsion donnée, ladite impulsion présentant sur ledit élément dispersif un angle d'incidence ($\alpha_1$) et un angle de diffraction ($\theta_{01}$) donnés, définissant un taux d'étirement donné de l'étireur,
    - un milieu amplificateur destiné à amplifier ladite impulsion étirée,
    - un compresseur (CPR) avec au moins un élément dispersif d'entrée ($GC_1$) sensiblement identique à celui de l'étireur destiné à compresser temporellement ladite impulsion amplifiée (5), de telle sorte que la durée de l'impulsion ainsi compressée soit sensiblement égale à celle de l'impulsion incidente,

    la chaîne étant **caractérisée en ce que** l'étireur et le compresseur comprennent des moyens de déplacement desdits éléments dispersifs entre une première et une seconde position, de telle sorte que la valeur de l'angle d'incidence ($\alpha_1$, $\alpha_2$) dans une première position soit égale à la valeur de l'angle de diffraction ($\theta'_{01}$, $\theta'_{02}$) dans la seconde position, et inversement, permettant de définir deux taux d'étirement de la chaîne, adaptés chacun à l'amplification d'impulsions de durées différentes.

2. Chaîne amplificatrice selon la revendication 1, dans laquelle lesdits moyens de déplacement sont formés d'une platine de rotation.

3. Chaîne amplificatrice selon l'une des revendications 1 ou 2, dans laquelle les angles d'incidence et de diffraction selon lesquels les éléments dispersifs d'entrée de l'étireur et du compresseur sont destinés à travailler, sont sensiblement identiques .

4. Chaîne amplificatrice selon l'une des revendications précédentes, dans laquelle l'étireur comprend un afocal (AFC), un second élément dispersif sensiblement identique au premier, et des moyens de déplacement dudit second élément dispersif entre une première et une seconde position, telles que le second élément dispersif reste parallèle audit élément dispersif d'entrée lorsque celui-ci est dans l'une ou l'autre de ses deux positions.

5. Chaîne amplificatrice selon l'une des revendications 1 à 3, dans laquelle l'étireur comprend un afocal (AFC) avec triplet de Ôfner, ledit afocal étant catadioptrique, formé d'un miroir concave (MCV) et d'un miroir convexe (MCX).

6. Chaîne amplificatrice selon l'une des revendications précédentes, dans laquelle le compresseur comprend un second élément dispersif identique au premier, et des moyens de déplacement dudit second élément dispersif entre une première et une seconde position, telles que le second élément dispersif reste parallèle audit élément dispersif d'entrée lorsque celui-ci est dans l'une ou l'autre de ses deux positions.

7. Chaîne amplificatrice selon la revendication 1 pour la génération d'impulsion à durée d'impulsion variable, sub-picoseconde, de longueur d'onde centrale sensiblement égale à 800 nm, l'étireur (STR), double passage, comprenant un réseau (GS) avec un nombre de traits d'environ 2200 tr/mm, un afocal (AFC) avec triplet de Öfner de type catadioptrique, le compresseur comprenant deux réseaux ($GC_1$, $GC_2$) identiques, parallèles, dont le nombre de traits est sensiblement de 2200 tr/mm, dans laquelle les angles d'incidence et de diffraction sur le réseau d'entrée de l'étireur et du compresseur sont identiques, sensiblement égaux à 70° et 55° ou inversement selon la position desdits réseaux.

8. Chaîne amplificatrice selon l'une des revendications précédentes, comprenant des moyens de filtrage pour adapter la largeur spectrale de l'impulsion incidente.

9. Chaîne amplificatrice selon la revendication 8, dans laquelle lesdits moyens de filtrage comprennent un filtre programmable de type AOPDF.

10. Chaîne amplificatrice selon la revendication 8, dans laquelle lesdits moyens de filtrage comprennent un filtre interférentiel.

11. Chaîne amplificatrice selon la revendication 8, dans laquelle lesdits moyens de filtrage sont formés d'un masque positionné dans un plan de Fourier de l'étireur.

12. Source laser pour la génération d'impulsions ultracourtes de durée d'impulsion variable, comprenant un ou plusieurs oscillateurs laser permettant de délivrer des impulsions de largeur spectrale donnée et une chaîne amplificatrice selon l'une des revendications précédentes.

13. Source laser pour la génération d'impulsions ultracourtes de durée d'impulsion variable, comprenant au moins un oscillateur laser permettant de délivrer des impulsions de largeur spectrale variable et une chaîne amplificatrice selon l'une des revendications 1 à 11.

**Claims**

1. Amplifier chain for generating ultrashort pulses of different pulse durations, comprising:

   - a stretcher (STR) with at least one entry dispersive element (GS) of the grating type and intended for temporally stretching an incident pulse (1) of given pulse duration, said pulse having, on said dispersive element, a given angle of incidence ($\alpha_1$) and a given angle of diffraction ($\theta_{01}$), defining a given degree of stretch by the stretcher;
   - an amplifying medium intended to amplify said stretched pulse; and
   - a compressor (CPR) with at least one entry dispersive element ($GC_1$), substantially identical to that of the stretcher, which is intended for temporally compressing said amplified pulse (5) in such a way that the duration of the pulse thus compressed is substantially equal to that of the incident pulse,

   the chain being **characterized in that** the stretcher and the compressor include means for moving said dispersive elements between first and second positions in such a way that the angle of incidence ($\alpha_1$, $\alpha_2$) in a first position is equal to the angle of diffraction ($\theta'_{01}$, $\theta'_{02}$) in the second position, and vice versa, making it possible to define two degrees of stretch of the chain, each suitable for amplifying pulses of different durations.

2. Amplifier chain according to Claim 1, in which said movement means are formed by a turntable.

3. Amplifier chain according to either of Claims 1 or 2, in which the angle of incidence and the angle of diffraction at which the entry dispersive elements of the stretcher and compressor are intended to work are substantially identical.

4. Amplifier chain according to one of the preceding claims, in which the stretcher comprises an afocal system (AFC), a second dispersive element, substantially identical to the first, and means for moving said second dispersive element between first and second positions, such that the second dispersive element remains parallel to said entry dispersive element when the latter is in one or other of its two positions.

5. Amplifier chain according to one of Claims 1 to 3, in which the stretcher comprises an afocal system (AFC) with an Öfner triplet, said afocal system being catadioptric and formed from a concave mirror (MCV) and from a convex mirror (MCX).

6. Amplifier chain according to one of the preceding claims, in which the compressor comprises a second dispersive element identical to the first, and means for moving said second dispersive element between first and second positions, which are such that the second dispersive element remains parallel to said entry dispersive element when the latter is in one or other of its two positions.

7. Amplifier chain according to Claim 1 for generating pulses of variable subpicosecond pulse duration, with a central wavelength substantially equal to 800 nm, the double-pass stretcher (STR) comprising a grating (GS), the number of lines of which is about 2200 per mm, a catadioptric Öfner-triplet afocal system (AFC), the compressor comprising two identical gratings ($GC_1$, $GC_2$), which are parallel, the number of lines of which is approximately 2200 per mm, in which the angle of incidence and the angle of diffraction on the entry grating of the stretcher and of the compressor are identical, approximately equal to 70° and 55°, or vice versa depending on the position of said gratings.

8. Amplifier chain according to one of the preceding claims, comprising filter means for adapting the spectral width of the incident pulse.

9. Amplifier chain according to Claim 8, in which said filter means comprise a programmable filter of the AOPDF type.

10. Amplifier chain according to Claim 8, in which said filter means comprise an interference filter.

11. Amplifier chain according to Claim 8, in which said filter means are formed by a mask positioned in a Fourier plane of the stretcher.

12. Laser source for generating ultrashort pulses of variable pulse duration, comprising one or more laser oscillators for delivering pulses of a given spectral width and an amplifier chain according to one of the preceding claims.

13. Laser source for generating ultrashort pulses of variable pulse duration, comprising at least one laser oscillator for delivering pulses of a variable spectral width and an amplifier chain according to one of Claims 1 to 11.

**Patentansprüche**

1. Verstärkerkette für die Erzeugung ultrakurzer Impulse mit unterschiedlichen Impulsdauern, mit

- eine Dehneinrichtung (STR) mit wenigstens einem dispersiven Eingangselement (GS) des Netztyps, das dazu bestimmt ist, einen einfallenden Impuls (1) mit gegebener Impulsdauer zeitlich zu dehnen, wobei der Impuls auf dem dispersiven Element einen gegebenen Einfallswinkel ($\alpha_1$) und einen gegebenen Beugungswinkel ($\theta_{01}$) hat, die ein gegebenes Dehnungsverhältnis der Dehneinrichtung definieren,
- ein Verstärkungsmedium, das dazu bestimmt ist, den gedehnten Impuls zu verstärken,
- eine Kompressionseinrichtung (CPR) mit wenigstens einem dispersiven Eingangselement ($GC_1$), das jenem der Dehneinrichtung im Wesentlichen gleicht und das dazu bestimmt ist, den verstärkten Impuls (5) zeitlich zu komprimieren, derart, dass die Dauer des somit komprimierten Impulses im Wesentlichen gleich jener des einfallenden Impulses ist,

wobei die Kette **dadurch gekennzeichnet ist, dass** die Dehneinrichtung und die Kompressionseinrichtung Mittel zum Verlagern der dispersiven Elemente zwischen einer ersten und einer zweiten Position enthalten, derart, dass der Wert des Einfallswinkels ($\alpha_1$, $\alpha_2$) an einer ersten Position gleich dem Wert des Beugungswinkels ($\theta'_{01}$, $\theta'_{02}$) an

der zweiten Position ist und umgekehrt, was ermöglicht, zwei Dehnungsverhältnisse der Kette zu definieren, die jeweils an die Verstärkung von Impulsen mit unterschiedlichen Dauern angepasst sind.

2.  Verstärkerkette nach Anspruch 1, wobei die Verlagerungsmittel aus einem Drehtisch gebildet sind.

3.  Verstärkerkette nach einem der Ansprüche 1 oder 2, wobei die Einfalls- und Beugungswinkel, gemäß denen die dispersiven Eingangselemente der Dehneinrichtung und der Kompressionseinrichtung arbeiten sollen, im Wesentlichen gleich sind.

4.  Verstärkerkette nach einem der vorhergehenden Ansprüche, wobei die Dehneinrichtung eine brennpunktlose Einrichtung (AFC), ein zweites dispersives Element, das dem ersten im Wesentlichen gleicht, und Mittel zum Verlagern des zweiten dispersiven Elements zwischen einer ersten und einer zweiten Position enthält, derart, dass das zweite dispersive Element zu dem dispersiven Eingangselement parallel bleibt, wenn sich dieses in der einen oder der anderen seiner zwei Positionen befindet.

5.  Verstärkerkette nach einem der Ansprüche 1 bis 3, wobei die Dehneinrichtung eine brennpunktlose Einrichtung (AFC) mit einem Öfner-Triplett enthält, wobei die brennpunktlose Einrichtung katadioptrisch ist und aus einem Konkavspiegel (MCV) und einem Konvexspiegel (MCX) gebildet ist.

6.  Verstärkerkette nach einem der vorhergehenden Ansprüche, wobei der Kompressionseinrichtung ein zweites dispersives Element, das dem ersten gleicht, und Mittel zum Verlagern des zweiten dispersiven Elements zwischen einer ersten und einer zweiten Position enthält, derart, dass das zweite dispersive Element zu dem ersten dispersiven Eingangselement parallel bleibt, wenn sich dieses in der einen oder der anderen seiner zwei Positionen befindet.

7.  Verstärkerkette nach Anspruch 1 für die Erzeugung eines Impulses mit variabler Impulsdauer im Subpikosekunden-Bereich und mit einer mittleren Wellenlänge, die im Wesentlichen gleich 800 nm ist, wobei die Dehneinrichtung (STR) mit Doppeldurchgang ein Netz (GS) mit einer Anzahl von Linien von etwa 2200 1/mm und eine brennpunktlose Einrichtung (AFC) mit einem Öfner-Triplett des katadioptrischen Typs enthält und wobei die Kompressionseinrichtung zwei Netze ($GC_1$, $GC_2$) enthält, die gleich und parallel sind und bei denen die Anzahl von Linien im Wesentlichen gleich 2200 1/mm beträgt, wobei der Einfallswinkel und der Beugungswinkel an dem Eingangsnetz der Dehn- bzw. der Kompressionseinrichtung übereinstimmen und je nach der Position der Netze im Wesentlichen gleich 70° bzw. 55° oder umgekehrt sind.

8.  Verstärkerkette nach einem der vorhergehenden Ansprüche, die Filterungsmittel enthält, um die Spektralbreite des einfallenden Impulses anzupassen.

9.  Verstärkerkette nach Anspruch 8, wobei die Filterungsmittel ein programmierbares Filter des AOPDF-Typs enthalten.

10. Verstärkerkette nach Anspruch 8, wobei die Filterungsmittel ein Interferenzfilter enthalten.

11. Verstärkerkette nach Anspruch 8, wobei die Filterungsmittel aus einer Maske gebildet sind, die in einer Fourier-Ebene der Dehneinrichtung positioniert ist.

12. Laserquelle für die Erzeugung von ultrakurzen Impulsen mit variabler Impulsdauer, mit einem oder mehreren Laser-Oszillatoren, die ermöglichen, Impulse mit gegebener Spektralbreite auszugeben, und mit einer Verstärkerkette nach einem der vorhergehenden Ansprüche.

13. Laserquelle für die Erzeugung von ultrakurzen Impulsen mit variabler Impulsdauer, mit wenigstens einem Laser-Oszillator, der ermöglicht, Impulse mit variabler Spektralbreite auszugeben, und mit einer Verstärkerkette nach einem der Ansprüche 1 bis 11.

# FIG.1

OSCILLATEUR — OSC

ETIREUR — STR

AMPLIFICATEUR — AMP

COMPRESSEUR — CPR

$P_1$ $P_2$ $P_3$ $P_4$

b r b r

CPA

EP 1 766 735 B1

FIG.2A

FIG.2B

FIG.3A

FIG.3B

**RÉFÉRENCES CITÉES DANS LA DESCRIPTION**

**Documents brevets cités dans la description**

- FR 2834080 A
- FR 2751095